# FASCICULE DE BREVET EUROPEEN

(11) **EP 0 961 072 B1**
(45) Date de publication et mention de la délivrance du brevet: **11.09.2002**
(21) Numéro de dépôt: 99401116.1
(22) Date de dépôt: 06.05.1999
(51) Int. Cl.: F16L 37/14

(54) **Dispositif de raccordement rapide d'une tuyauterie métallique d'alimentation en fluide sous pression avec un carter ou analogue**
Vorrichtung zum schnellen Verbinden eines Zuführmetallrohres mit einem Gehäuse oder dgl
Device for quickly connecting a metal food conduit under pressure to a housing or the like

(30) Priorité: 25.05.1998 FR 9806547
(43) Date de publication de la demande: 01.12.1999
(73) Titulaire: AUTOMOBILES PEUGEOT, 75116 Paris (FR); AUTOMOBILES CITROEN, 92200 Neuilly-sur-Seine (FR)
(72) Inventeur: Gauthier, Philippe, 21000 Dijon (FR); Voye, Didier, 21110 Aiserey (FR)
(74) Mandataire: Armengaud Ainé, Alain

(56) Documents cités:
- DE-A- 2 915 391
- DE-A- 3 537 502
- DE-C- 4 219 235
- GB-A- 1 030 535

## Description

La présente invention est relative à un dispositif de raccordement rapide d'une tuyauterie métallique d'alimentation en fluide avec le carter ou analogue d'un mécanisme actionné par la pression de ce fluide.

L'invention concerne plus particulièrement, quoique de façon non exclusive, un ensemble permettant de réunir de façon étanche et sûre une canalisation parcourue par de l'huile de commande avec le cylindre d'un vérin hydraulique, pour introduire ou extraire de la cavité interne de celui-ci, un volume donné selon la position désirée dans cette cavité du piston de ce vérin.

L'invention s'applique encore plus spécialement à un raccord rapide de ce genre, adapté à l'alimentation du carter du vérin qui assure, dans un véhicule automobile, la commande des barres provoquant le pivotement des roues avant de ce véhicule, consécutivement à la rotation de son volant, la manoeuvre étant assistée de sorte que l'effort à produire par le conducteur soit en permanence contrôlé et largement démultiplié.

On sait notamment que le carter du mécanisme de commande d'une direction assistée pour véhicule automobile est généralement équipé d'un distributeur d'huile qui oriente le débit de celle-ci vers un vérin monté en bout de la colonne de direction actionnée par le volant, ce vérin fournissant l'effort nécessaire au braquage des roues.

Selon deux modes de réalisation bien connus dans la technique, ce vérin est monté, soit à l'extérieur du carter du mécanisme de direction qui comporte usuellement une crémaillère en prise avec un pignon fixé en bout de la colonne de direction, la tige de ce vérin actionnant par un élément de renvoi approprié cette crémaillère, soit à l'intérieur même de ce carter, son piston étant directement solidaire de la crémaillère.

Dans tous les cas, le vérin est commandé par une valve de pilotage qui permet d'envoyer l'huile sous pression d'un côté ou de l'autre du piston du vérin, cette valve étant reliée au carter du vérin par des tuyauteries métalliques, généralement en acier, qui peuvent avoir un diamètre extérieur de l'ordre de 6 mm et une épaisseur de 0,75 mm, afin d'autoriser un débit d'huile suffisant tout en résistant en fonctionnement à la pression de travail.

Or, un problème se pose pour assurer un raccordement mécanique sur et parfaitement étanche sur l'extrémité de chaque tuyauterie métallique et le carter du vérin auquel elle est reliée, ce raccordement devant en outre être effectué au montage du véhicule dans les meilleures conditions de rapidité pour permettre une fabrication en grande série dans les meilleures conditions de rentabilité.

On a déjà envisagé diverses solutions pour effectuer un tel raccordement, comme déjà décrit notamment dans le brevet américain US-A-3 711 125 ou le brevet français FR-A-2 697 070.

Dans le premier de ces documents, la liaison est réalisée à l'aide d'un clip, monté dans un alésage du carter prévu pour la réception de l'extrémité de la tuyauterie, ce clip, qui maintient entre la paroi de l'alésage et la surface externe de la tuyauterie un joint d'étanchéité, venant en prise avec un bourrelet en relief ménagé dans cette dernière. Cette solution présente cependant des inconvénients, notamment pour une production en grande série ; en outre elle exige un emboutissage précis du clip, pour permettre un maintien assuré du bourrelet de la tuyauterie, ce qui grève le prix de revient de l'ensemble.

Dans le brevet français au nom des demanderesses, le blocage de l'extrémité de la tuyauterie dans son alésage avec maintien d'un joint d'étanchéité entre l'extrémité de celle-ci et la paroi du carter, est réalisé par un embout fileté qui, en se vissant dans une partie taraudée de l'alésage, vient s'appliquer contre une bague en appui sur le joint. Cette solution est relativement sûre, mais est pénalisante pour une production en grande série ; de plus, si le vissage est réalisé manuellement, le couple de serrage peut ne pas être parfaitement respecté de sorte qu'il en résulte des risques de fuites, le joint n'étant pas convenablement serré contre sa portée d'appui dans l'alésage de réception du carter.

La présente invention a pour objet un dispositif de raccordement rapide de ce genre, qui évite néanmoins les inconvénients des réalisations antérieures précitées, avec une solution où l'extrémité de la tuyauterie ou canalisation d'alimentation métallique est rendue solidaire du carter qui la reçoit sans vissage d'un écrou ou analogue, par simple emboîtement, mais en réalisant une liaison efficace avec une parfaite étanchéité.

A cet effet, le dispositif considéré, pour le raccordement d'un tuyau métallique d'alimentation en fluide sous pression avec un carter de mécanisme, dispositif comportant un alésage à section étagée de réception et de butée de l'extrémité ouverte de la tuyauterie qui s'y engage, cette tuyauterie présentant au voisinage de cette extrémité, un bourrelet annulaire en saillie, emboîté dans l'alésage, ce bourrelet comportant deux faces sensiblement parallèles, dont l'une, dirigée vers l'extrémité de la tuyauterie, est en contact avec un premier joint torique entourant la tuyauterie avec un léger serrage, se caractérise en ce que l'autre face du bourrelet de la tuyauterie est en contact avec un second joint torique, serré entre le bourrelet et une rondelle de blocage montée dans l'alésage du carter derrière le bourrelet pour comprimer le second joint, cette rondelle étant elle-même immobilisée dans l'alésage par un circlips torique logé dans une rainure circulaire prévue derrière la rondelle.

La mise en oeuvre selon l'invention d'un second joint torique, monté sur la tuyauterie métallique derrière le bourrelet, présente un double avantage.

D'une part, il permet de maintenir l'extrémité de la tuyauterie appliquée sur le fond de l'alésage qui le reçoit en fournissant un léger effort afin de rattraper les éventuelles dispersions d'usinage.

D'autre part, le faible effort exercé sur le bourrelet et sur la rondelle permet la mise en place du circlips dans son logement à l'aide d'un outil à main.

Quant à la rondelle, son rôle est de reprendre les efforts radiaux susceptibles de s'exercer sur la tuyauterie au droit de son raccordement avec le carter, notamment en cas de choc hydraulique consécutivement à une inversion du sens d'écoulement du fluide de commande ou à un choc externe accidentel.

On notera également que la rondelle permet d'élargir le diamètre afin de faciliter la mise en place du circlips.

Selon une disposition préférée, les deux joints toriques sont identiques. En outre et selon une autre caractéristique, le circlips d'immobilisation de la rondelle comporte une extension s'étendant sensiblement parallèlement à l'axe de l'alésage vers l'extérieur du carter, cette extension permettant de saisir le circlips pour faciliter son extraction de la rainure circulaire.

Selon encore une autre caractéristique, l'alésage présente un cône d'entrée de section décroissante jusqu'au droit de la rainure circulaire de réception du circlips, de manière à permettre de rétracter progressivement celui-ci lors de sa mise en place dans cette rainure.

D'autres caractéristiques d'un dispositif de raccordement rapide pour tuyauterie métallique d'alimentation, établi conformément à l'invention, apparaîtront encore à travers la description qui suit d'un exemple de réalisation, donné à titre indicatif et non limitatif, en référence aux dessins annexés sur lesquels :
- La Figure 1 est un schéma de principe d'un vérin mis en oeuvre dans un mécanisme de direction assistée pour véhicule automobile.
- La Figure 2 est une vue en coupe, à plus grande échelle, illustrant le raccord rapide selon l'invention assurant la liaison étanche entre un tuyau métallique d'alimentation en fluide et le vérin du mécanisme de la Figure 1.

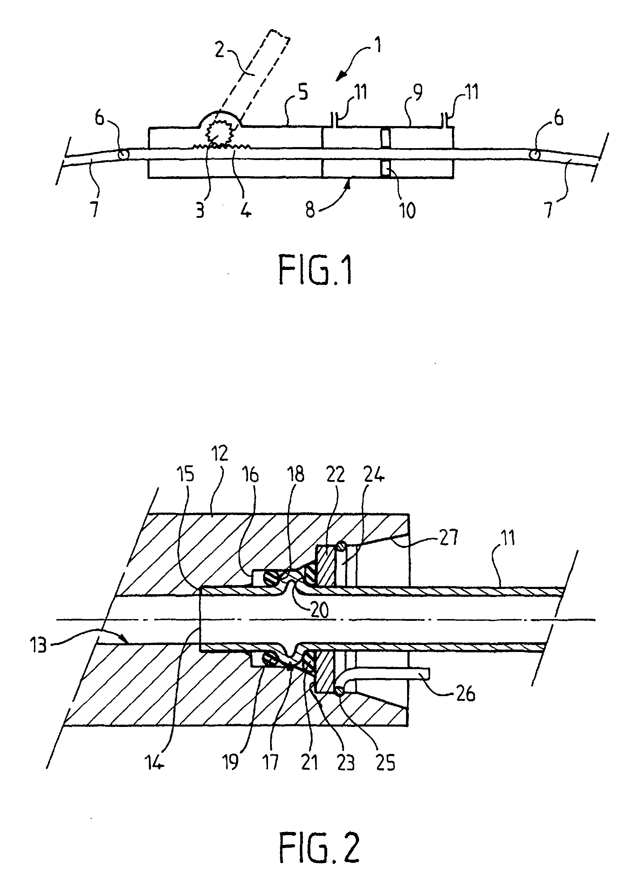

Sur la Figure 1, la référence 1 désigne de façon très schématique un mécanisme de direction assistée pour véhicule automobile, comportant une colonne de direction 2, actionnée par le volant (non représenté) manoeuvré par le conducteur, cette colonne étant munie à son extrémité d'un pignon ou d'une couronne dentée 3 en prise avec une crémaillère 4, de telle sorte que cette dernière puisse se déplacer dans un sens ou dans l'autre à l'intérieur du carter 5 du mécanisme.

La crémaillère 4 se prolonge à l'extérieur du carter 5 et est réunie, par des articulations appropriées 6, à des bras 7, eux-mêmes réunis aux roues avant du véhicule afin de permettre d'en assurer le braquage, selon diverses dispositions qui sont elles-mêmes bien connues dans la technique et que la Figure 1 ne fait pas apparaître, ces dispositions étant indifférentes à la présente invention.

Le carter 5 du mécanisme incorpore, pour assister le déplacement de la crémaillère 4 et limiter l'effort de commande à transmettre à celle-ci par la barre de direction 2, un vérin 8 comportant un cylindre 9 et un piston 10 monté mobile à l'intérieur de celui-ci sous l'effet d'une pression d'un fluide de commande, usuellement de l'huile, laquelle est introduite ou retirée du cylindre 9 de part et d'autre du piston 10 par des tuyauteries d'alimentation métalliques 11.

La présente invention se rapporte à un raccord rapide qui permet d'assurer la liaison sûre et étanche entre chacune de ces tuyauteries d'alimentation et le carter 5 du mécanisme, notamment avec le cylindre 9 du vérin de commande 8.

La Figure 2 illustre en coupe axiale partielle le raccord envisagé.

Sur cette Figure, la tuyauterie métallique 11 est reçue dans un embout 12 faisant partie du carter 5, cet embout comportant un alésage interne 13, étagé, dans lequel est introduite l'extrémité 14 de la tuyauterie.

De préférence, cette extrémité 14 est droite, c'est-à-dire s'étend perpendiculairement à la direction axiale de la tuyauterie 11, notamment afin de limiter les surfaces en contact avec l'huile sous pression circulant dans celle-ci, introduite (ou extraite) du carter, et ne pas perturber l'écoulement de celle-ci en créant des efforts axiaux préjudiciables.

L'alésage 13 présente un premier épaulement interne 15 contre lequel s'appuie l'extrémité 14 de la tuyauterie 11 lorsque celle-ci est emboîtée dans cet alésage.

Au-delà de ce premier épaulement 15, l'alésage 13 comporte un second épaulement 16, réalisant un élargissement de la section de l'alésage, dont le diamètre est déterminé par construction pour permettre de recevoir un bourrelet 17, ménagé dans la paroi externe de la tuyauterie 11, ce bourrelet pouvant être réalisé notamment par martelage ou repoussage de celle-ci.

Le bourrelet 17 présente deux faces opposées, sensiblement parallèles l'une à l'autre, la face 18, dirigée vers l'extrémité 14 de la tuyauterie 11, étant appliquée contre un premier joint torique 19, monté avec un léger serrage sur la paroi externe de cette tuyauterie, ce premier joint étant ainsi emprisonné dans l'alésage 13, entre son épaulement 16 et le bourrelet 17.

Selon l'invention, l'autre face 20 du bourrelet 17, sensiblement parallèle à la face 18 mais dirigée du côté opposé, est en appui contre un second joint torique 21, de préférence identique au premier joint 19, ce second joint étant comprimé entre cette face 20 et une rondelle de blocage 22, disposée autour et coaxialement à la tuyauterie 11, derrière le second joint.

Cette rondelle 22 s'adapte et s'applique contre un troisième épaulement 23 prévu dans l'alésage 13, dont le diamètre est supérieur à celui de l'épaulement 16. L'ensemble est ensuite immobilisé au moyen d'un circlips torique 24 venant se disposer dans une rainure circulaire 25 prévue dans l'alésage 13 derrière la rondelle.

De préférence, le circlips 24 comporte une extension 26 qui s'étend parallèlement à l'axe de la tuyauterie 11 vers l'extérieur de l'alésage, de manière à permettre de saisir le circlips et de faciliter son extraction de la rainure circulaire 25. Avantageusement, la partie terminale 27 de l'alésage 13 est conique afin de permettre de contracter progressivement le circlips 24 au fur et à mesure qu'il est introduit dans l'alésage en direction de sa rainure.

On réalise ainsi un raccord de conception très simple, peu coûteux, et qui se prête facilement à une fabrication en grande série, le montage de la tuyauterie métallique, préalablement équipée de ses deux joints toriques de part et d'autre de son bourrelet et de la rondelle de blocage du second joint, pouvant être effectué de manière extrêmement rapide, l'immobilisation de la tuyauterie dans l'alésage du carter qui reçoit son extrémité ne nécessitant plus que la mise en place quasi immédiate du circlips dans sa rainure circulaire, derrière la rondelle.

Le montage proposé permet d'assurer une étanchéité de la liaison pour des valeurs de pression importantes pouvant atteindre voire dépasser 200 bars, sous des températures d'utilisation pouvant s'élever jusqu'à 120°C, ce qui va largement au-delà des conditions usuelles de pression et de température pour de tels circuits. En outre, grâce à la présence des deux joints, il assure un rattrapage efficace des cotes d'usinage, notamment de la tuyauterie et de l'alésage du carter qui la reçoit.

Bien entendu, il va de soi que l'invention ne se limite pas à l'exemple de réalisation plus spécialement décrit ci-dessus en référence aux dessins annexés.

## Revendications

1. Dispositif pour le raccordement d'une tuyauterie métallique (11) d'alimentation en fluide sous pression avec un carter de mécanisme dispositif comportant un alésage (13) à section étagée (15, 16, 23) de réception et de butée de l'extrémité ouverte (14) de la tuyauterie qui s'y engage, cette tuyauterie présentant au voisinage de cette extrémité, un bourrelet annulaire en saillie (17), emboîté dans l'alésage, ce bourrelet comportant deux faces sensiblement parallèles, dont l'une (18), dirigée vers l'extrémité de la tuyauterie, est en contact avec un premier joint torique (19) entourant la tuyauterie avec un léger serrage, **caractérisé en ce que** l'autre face (20) du bourrelet de la tuyauterie est en contact avec un second joint torique (21), serré entre le bourrelet et une rondelle de blocage (22) montée dans l'alésage du carter derrière le bourrelet pour comprimer le second joint, cette rondelle étant elle-même immobilisée dans l'alésage par un circlips torique (24) logé dans une rainure circulaire (25) prévue derrière la rondelle.

2. Dispositif selon la revendication 1, **caractérisé en ce que** les deux joints toriques (19, 21) sont identiques.

3. Dispositif selon l'une des revendications 1 ou 2, **caractérisé en ce que** le circlips (24) d'immobilisation de la rondelle (22) comporte une extension (26) s'étendant sensiblement parallèlement à l'axe de l'alésage vers l'extérieur du carter.

4. Dispositif selon l'une quelconque des revendications 1 à 3, **caractérisé en ce que** l'alésage (13) présente un cône d'entrée (27) de section décroissante jusqu'au droit de la rainure circulaire (25) de réception du circlips (24).

## Patentansprüche

1. Vorrichtung zum Verbinden eines Zuführungsrohrs aus Metall (11) eines Druckfluids mit einem Gehäuse eines Mechanismus, wobei die Vorrichtung eine Bohrung (13) mit abgestuftem Querschnitt (15, 16, 23) zur Aufnahme und zum Anschlag des offenen Endes (14) des darin eingreifenden Zuführungsrohres aufweist und dieses Zuführungsrohr in der Nähe dieses Endes einen in die Bohrung eingesetzten vorspringenden Ringwulst (17) aufweist, der zwei im wesentlichen parallele Flächen hat, von denen die eine (18) zum Ende des Zuführungsrohrs hin gerichtet und in Berührung mit einer das Zuführungsrohr mit einer geringen Einspannung umgebenden ersten O-Ring-Dichtung (19) ist, **dadurch gekennzeichnet, daß** die andere Seite (20) des Wulstes des Zuführungsrohrs in Berührung mit einer zweiten O-Ring-Dichtung (21) ist, die zwischen dem Ringwulst und einer Blockierungsscheibe (22) eingespannt ist, die in der Bohrung des Gehäuses hinter der Ringwulst montiert ist, um die zweite Dichtung zusammenzudrücken, wobei diese Blokkierungsscheibe selbst in der Bohrung durch einen torischen Sicherungsring (24) unbeweglich gehalten ist, der in einer hinter der Blockierungsscheibe vorgesehenen Ringnut (25) sitzt.

2. Vorrichtung nach Anspruch 1, **dadurch gekennzeichnet, daß** die zwei O-Ring-Dichtungen (19, 21) identisch sind.

3. Vorrichtung nach einem der Ansprüche 1 oder 2, **dadurch gekennzeichnet, daß** der Sicherungsring (24) zum Unbeweglichhalten der Scheibe (22) einen Fortsatz (26) aufweist, der sich im wesentlichen parallel zur Achse der Bohrung nach außerhalb des Gehäuses erstreckt.

4. Vorrichtung nach einem der Ansprüche 1 bis 3, **dadurch gekennzeichnet, daß** die Bohrung (13) einen Eingangskonus (27) mit einem bis gerade zur Ringnut (25) zur Aufnahme des Sicherungsringes (24) abnehmenden Querschnitt aufweist.

## Claims

1. Device for connecting a metal feed pipe (11) for fluid under pressure to a mechanism housing, the device comprising a bore (13) with a stepped section (15, 16, 23) for receiving and stopping the open end (14) of the pipe engaging therewith, this pipe having, near this end, a projecting annular shoulder (17) fitted in the bore, the shoulder comprising two substantially parallel faces, one of which (18), directed toward the end of the pipe, is in contact with a first O-ring seal (19) surrounding the pipe with a light grip, **characterised in that** the other face (20) of the shoulder of the pipe is in contact with a second O-ring seal (21), gripped between the shoulder and a stop washer (22) fitted in the bore of the housing behind the shoulder to compress the second seal, this washer itself being immobilised in the bore by a toric circlip (24) housed in a circular groove (24) provided behind the washer.

2. Device according to claim 1, **characterised in that** the two O-ring seals (19, 21) are identical.

3. Device according to either one of claims 1 or 2, **characterised in that** the circlip (24) for immobilising the washer (22) comprises an extension (26) extending substantially parallel to the axis of the bore toward the exterior of the housing.

4. Device according to any one of claims 1 to 3, **characterised in that** the bore (13) has an inlet cone (27) with a section which tapers up to the vertical of the circular groove (25) for receiving the circlip (24).
